# EUROPEAN PATENT APPLICATION

(11) **EP 3 929 026 A1**
(43) Date of publication of application: **29.12.2021**
(21) Application number: 20182063.6
(22) Date of filing: 24.06.2020
(51) Int. Cl.: B60L 50/50, B60L 53/126, B60L 53/12, B60L 53/39, B60L 53/35

(54) **A METHOD FOR REPOSITIONING A POWER RECEIVING COIL OF A VEHICLE**

(71) Applicant: VOLVO TRUCK CORPORATION, 405 08 Göteborg (SE)
(72) Inventor: SANDGREN, Victor, 416 78 GÖTEBORG (SE); WEDDING, Christoffer, 416 72 GÖTEBORG (SE); RUNDSTRÖM, Håkan, 405 08 GÖTEBORG (SE); HU, Siyuan, 417 08 GÖTEBORG (SE)
(74) Representative: Kransell & Wennborg KB

(57) **Abstract**

The present invention relates to a method for repositioning a power receiving coil (122) of a vehicle (1) relative a power emitting coil (222) of a wireless charging system (200, 200'). The method comprising the steps of:
- detecting (S1) a positioning of the vehicle at a charging location (50) in which the power receiving coil detects reception of electromagnetic radiation emitted from the power emitting coil,
- determining (S2) whether or not the efficiency of the electromagnetic radiation reception of the power receiving coil achieves a pre-set criteria,
- repositioning (S3) the power receiving coil relative the power emitting coil in at least the vertical direction (z) in response to determining that the efficiency of the electromagnetic radiation reception does not fulfil the pre-set criteria.

## Description

### TECHNICAL FIELD

The present invention relates to a method for repositioning a power receiving coil of a vehicle relative a power emitting coil of a wireless charging system. The invention further relates to a wireless power supply device for a vehicle, and to a vehicle.

### BACKGROUND

A vehicle typically comprises an engine for propelling the vehicle. The engine may be powered by various means, such as e.g. by a liquid or gaseous fuel in an internal combustion engine, or by electric power in an electric motor. Moreover, hybrid solutions exist in which the vehicle is propelled both by an internal combustion engine and an electric motor. In either way, a battery is used to power the electric motor, which battery periodically needs to be charged.

One common solution to charge the battery is by a plug connected to a power source, such as e.g. a power grid, by an electrical wire. Typically, the vehicle is parked in a parking/charging spot providing such charging means, and the driver or other person manually plug the charging means into a socket of the vehicle, the socket being in electrical communication with the battery enabling charging of the same.

Another solution to charge the battery is by a wireless charging system. By using such system, the wired solution with a plug and socket can be omitted. The wireless charging system typically includes a charging station having a power emitting coil, or transmission coil, configured to emit electromagnetic radiation. The wireless system further comprises a power receiving coil configured to receive the emitted electromagnetic radiation. The power receiving coil is most often arranged on the vehicle (on-board), and the power emitting coil is most often arranged on the ground or foundation of the charging station or parking/charging spot (off-board).

Such wireless systems may include a positioning mechanism as a part of the charging station for bringing the power emitting coil into a charging distance of the power receiving coil on the vehicle, after the vehicle has been parked at the parking/charging spot. However, even though such positioning mechanism enables the battery to be charged, regardless if the vehicle is parked in a position in which the power receiving coil initially is too far away from the power emitting coil or not, it does not provide a system enabling an optimal charging under the given conditions.

Thus, there is a need in the industry for an improved method to charge the battery of the vehicle.

### SUMMARY

It is an object of the present disclosure to at least to some extent alleviate the shortcomings discussed above in relation to known positioning mechanisms, and to improve the positioning of the charging system related to charging of the vehicle.

According to at least a first aspect of the present invention, a method for repositioning a power receiving coil of a vehicle relative a power emitting coil of a wireless charging system is provided. The method comprises the steps of:
- detecting a positioning of the vehicle at a charging location in which the power receiving coil detects reception of electromagnetic radiation emitted from the power emitting coil,
- determining whether or not the efficiency of the electromagnetic radiation reception of the power receiving coil achieves a pre-set criteria,
- repositioning the power receiving coil relative the power emitting coil in at least the vertical direction in response to determining that the efficiency of the electromagnetic radiation reception does not fulfil the pre-set criteria.

Hereby, an effective and yet simple method for enabling an efficient charging of the vehicle is provided. In particular, by repositioning the power receiving coil relative the power emitting coil in at least the vertical direction, a means for effectively improving the transfer the electromagnetic radiation is provided. The electromagnetic radiation may typically refer to the electromagnetic field induced by the power emitting coil.

Moreover, repositioning of the power receiving coil relative the power emitting coil in at least the vertical direction results in a quick response in the change of efficiency of the electromagnetic radiation reception. Hereby, the efficiency of the electromagnetic radiation reception of the power receiving coil can relatively quickly be improved, as the absolute distance between the power receiving coil and the power emitting coil is directly affected by a change in vertical distance, or vertical distance component, between the power receiving coil and the power emitting coil.

It should be understood that the repositioning of the power receiving coil relative the power emitting coil is a relative movement, carried out by a vertical movement of the power receiving coil and/or the power emitting coil, such that the vertical distance between the power receiving coil and the power emitting coil is changed. However, according to at least one example embodiment, the movement in the at least vertical direction is carried out by a movement, such as an absolute movement, of the power receiving coil. According to at least one example embodiment, the movement in the at least vertical direction is carried out by a movement, such as an absolute movement, of the power emitting coil. According to at least one example embodiment, when one of the power receiving coil and the power emitting coil moves in the vertical direction, the other one of the power receiving coil and the power emitting coil is not moving, i.e. is at a standstill.

According to at least one example embodiment, information of the pre-set criteria related to the efficiency of the electromagnetic radiation reception of the power receiving coil, i.e. corresponding to the expected power transmission, is provided. Data with such information may e.g. be transferred from the power emitting coil-side to the power receiving coil-side via wireless communication. According to at least one example embodiment, such data is transferred together with the electromagnetic radiation from the power emitting coil. Additionality or alternatively, information of the pre-set criteria related to the efficiency of the electromagnetic radiation reception is at least partly based on historical positioning data and/or historical data of electromagnetic radiation reception. According to at least one example embodiment, the pre-set criteria is based on a previous, or preceding, determination of the efficiency of the electromagnetic radiation reception, in order to carry out a repositioning resulting in an improvement of the efficiency. For example, the pre-set criteria may be set as an improvement of the previous or preceding determination of the efficiency by e.g. at least 5 %.

According to at least one example embodiment, the pre-set criteria is a predetermined threshold. In such embodiments, in case the pre-set criteria is fulfilled, the efficiency of the electromagnetic radiation reception is equal to or above the predetermined threshold.

According to at least one example embodiment, the step of determining (whether or not the efficiency of the electromagnetic radiation reception of the power receiving coil achieves a pre-set criteria) is carried out by transmitting pulses of electromagnetic radiation from the power emitting coil, and then determining the efficiency based on the reception of said pulses of the power receiving coil.

According to at least one example embodiment, the method further comprises the step of repeating the step of determining, and the step of repositioning, until the efficiency of the electromagnetic radiation reception of the power receiving coil fulfils the pre-set criteria (or in case a predetermined threshold, is equal or above the predetermined threshold).

Hereby, the desired efficiency of the electromagnetic radiation reception can be achieved by repeatedly repositioning the power receiving coil relative the power emitting coil in at least the vertical direction.

According to at least one example embodiment, the step of repeating is carried out until a maximum, or local maximum, of the efficiency is achieved. In such cases, the pre-set criteria is typically related to a previous, or preceding, determination of the efficiency.

According to at least one example embodiment, in the step of detecting, the power receiving coil is distanced from the power emitting coil by at least a first vertical distance, and wherein the step of repositioning results in that the power receiving coil is distanced from the power emitting coil by at least a second vertical distance, the second vertical distance being smaller or larger than said first vertical distance.

Thus, the step of repositioning may result in that the power receiving coil is distanced from the power emitting coil, or in that the power receiving coil is brought closer to the power emitting coil. In other words, there may be an optimal distance, such as e.g. an optimal vertical distance, between the power emitting coil and the power receiving coil which is dependent on e.g. frequency of the electromagnetic radiation and/or coil design, and the repositioning may thus result in that the distance between the power emitting coil and the power receiving coil is brought closer to this optimal distance.

According to at least one example embodiment, a movement in the vertical direction is a movement parallel the gravitational direction. Thus, the vertical movement may be in the same direction as the gravitational direction and/or in an opposite direction to the gravitational direction.

Thus, as the vehicle is typically positioned above the power emitting coil, a movement along the gravitational field, i.e. in, or opposite to, the gravitational direction, will result in the desired improved of efficiency.

According to at least one example embodiment, the step of repositioning includes vertically moving the undercarriage of the vehicle to which the power receiving coil is attached to.

Hereby, a simple but yet effective means for changing the relative distance between the power receiving coil and the power emitting coil is provided. In this example embodiment, at least the power receiving coil is subject to an absolute movement in at least the vertical direction. The undercarriage of the vehicle may be moved vertically away from, or closer to, the power emitting coil. For example, the power emitting coil is arranged in, or on, the ground below the undercarriage of the vehicle.

According to at least one example embodiment, the step of vertically moving the undercarriage of the vehicle is carried out by adjusting the suspension of the vehicle.

Hereby, a simple but yet effective means for vertically moving the undercarriage of the vehicle, and thus changing the relative distance between the power receiving coil and the power emitting coil is provided. The suspension may e.g. be an air suspension, and the step of adjusting the suspension of the vehicle may comprise increasing or decreasing the air pressure in the air suspension.

According to at least one example embodiment, the step of vertically moving the undercarriage of the vehicle is carried out by adjusting the tire pressure of the vehicle.

Such change is typically relevant for relatively small changes in repositioning.

According to at least one example embodiment, the power receiving coil is movably attached to the undercarriage of the vehicle, and the step of repositioning includes vertically moving the power receiving coil relative the undercarriage of the vehicle.

Hereby, an alternative simple but yet effective means for changing the relative distance between the power receiving coil and the power emitting coil is provided. The power receiving coil may be attached to the undercarriage of the vehicle by a re-positioning device, which e.g. is operable by pressurized air wherein an increase in pressure results in that the power receiving coil is brought further away from the undercarriage of the vehicle, and a decrease in pressure results in that the power receiving coil is brought closer to the undercarriage of the vehicle.

According to at least one example embodiment, the step of repositioning includes vertically moving the power emitting coil.

Hereby, an alternative means for changing the relative distance between the power receiving coil and the power emitting coil is provided. The power emitting coil may e.g. be attached to a movable arm which can be moved up or down in order to reposition the power emitting coil.

According to at least one example embodiment, the horizontal plane includes the longitudinal direction of the vehicle, and the vertical direction is perpendicular to said horizontal plane.

Thus, the movement in the at least vertical direction is perpendicular to the horizontal plane. According to at least one example embodiment, the step of repositioning is carried out by moving the power receiving coil relative the power emitting coil in solely the vertical direction. According to at least one example embodiment, the step of repositioning does not include a movement of the power receiving coil relative the power emitting coil in the horizontal plane.

According to at least one example embodiment, the method further comprises step of repositioning the power receiving coil relative the power emitting coil in the horizontal plane in response to determining that the efficiency of the electromagnetic radiation reception does not fulfill the pre-set criteria.

Thus, in addition to moving the power receiving coil relative the power emitting coil in at least the vertical direction, the power receiving coil can be moved relative the power emitting coil in at least the horizontal plane. Hereby, movement in three dimensions is possible, and the efficiency of the electromagnetic radiation reception can be further improved.

According to at least one example embodiment, the method further comprises the step of repeating the step of determining and the step of repositioning the power receiving coil in a horizontal plane, until the efficiency of the electromagnetic radiation reception of the power receiving coil fulfils the pre-set criteria.

Hereby, the speed of reaching the pre-set criteria can be improved. According to at least one example embodiment, the step of repositioning the power receiving coil relative the power emitting coil in at least the vertical direction is carried out together with the step of repositioning the power receiving coil in a horizontal plane, until the efficiency of the electromagnetic radiation reception of the power receiving coil fulfils the pre-set criteria.

According to at least one example embodiment, the method further comprises the step of holding the power receiving coil in a fixed position relative the power emitting coil in response to determining that the efficiency of the electromagnetic radiation reception fulfils the pre-set criteria.

Hereby, the reached efficiency can be maintained during the transmission of the electromagnetic radiation.

According to at least a second aspect of the present invention, a wireless power supply device for a vehicle is provided. The wireless power supply device comprises:
- a power receiving coil configured to receive electromagnetic radiation emitted from a power emitting coil,
- a control unit connected to the power receiving coil, the control unit being configured to determine whether or not the efficiency of electromagnetic radiation reception of the power receiving coil achieves a pre-set criteria,
- a re-positioning arrangement configured to, in response to the control unit determining that the efficiency of the electromagnetic radiation reception does not fulfil the pre-set criteria, at least vertically reposition the power receiving coil relative the power emitting coil.

Effects and features of this second aspect of the invention are largely analogous to those described above in connection with the first aspect of the invention. Embodiments mentioned in relation to the first aspect of the invention are largely compatible with the second aspect of the invention, of which some are exemplified below without repetition of the advantageous effects. The wireless power supply may e.g. be integrated in the vehicle.

According to at least one example embodiment, the re-positioning arrangement is configured to, in response to the control unit determining that the efficiency of the electromagnetic radiation reception does not fulfil the pre-set criteria, at least vertically reposition the power receiving coil.

According to at least one example embodiment, the control unit is configured to determine whether or not the power receiving coil is within an electromagnetic radiation reception distance from the power emitting coil.

For example, the vehicle may park at a charging spot such that the power receiving coil is within, or not within, an electromagnetic radiation reception distance of the power emitting coil. If the power receiving coil is not within this distance, the vehicle may be instructed to move. Alternatively, the control unit is configured to instruct the re-positioning arrangement to reposition the power receiving coil (horizontally or vertically) in order to examine if such movement will bring the power receiving coil is within an electromagnetic radiation reception distance from the power emitting coil.

According to at least one example embodiment, the control unit is configured to repeat the step of determining whether or not the efficiency of the electromagnetic radiation reception of the power receiving coil achieves a pre-set criteria after each repositioning of the re-positioning arrangement, until the control unit determines that the efficiency of the electromagnetic radiation reception of the power receiving coil fulfils the pre-set criteria.

As previously mentioned, the pre-set criteria may be a predetermined threshold.

According to at least one example embodiment, the re-positioning arrangement is configured to, in response to the control unit determining that the efficiency of the electromagnetic radiation reception does not fulfil the pre-set criteria, move the power receiving coil vertically closer to, or further away from, the power emitting coil.

According to at least one example embodiment, a movement in the vertical direction is a movement in the gravitational direction, and wherein the re-positioning arrangement is configured to move the power receiving coil in the gravitational direction.

According to at least one example embodiment, the re-positioning arrangement is configured to, in response to the control unit determining that the efficiency of the electromagnetic radiation reception does not fulfil the pre-set criteria, reposition the power receiving coil in a horizontal plane.

According to at least a third aspect of the invention, a vehicle comprising a wireless power supply device according to the second aspect is provided. The vehicle may alternatively comprise a control unit configured to carry out the method described in accordance with the first aspect of the invention.

Effects and features of this third aspect of the invention are largely analogous to those described above in connection with the first and second aspects of the invention. Embodiments mentioned in relation to the first and second aspects of the invention are largely compatible with the third aspect of the invention, of which some are exemplified below without repetition of the advantageous effects.

According to at least one example embodiment, the power receiving coil is attached to an undercarriage of the vehicle, and the re-positioning arrangement is configured to vertically move the undercarriage of the vehicle in order to vertically move the power receiving coil.

As already mentioned in the first aspect of the invention, the undercarriage of the vehicle may be moved vertically away from, or closer to, the power emitting coil. For example, the power emitting coil is arranged in, or on, the ground below the undercarriage of the vehicle.

According to at least one example embodiment, the re-positioning arrangement comprises the suspension of the vehicle.

According to at least one example embodiment, at least a part of the re-positioning arrangement is arranged in between the power receiving coil and the undercarriage of the vehicle such that the receiving coil movably attached to the undercarriage of the vehicle, and wherein the re-positioning arrangement is configured to vertically move the power receiving coil relative the undercarriage of the vehicle.

According to at least one example embodiment, the control unit is configured to hold the power receiving coil in a fixed position relative the power emitting coil in response to determining that the efficiency of the electromagnetic radiation reception fulfils

According to at least a fourth aspect of the present invention, wireless charging system for a vehicle is provided. The wireless charging system comprises the wireless power supply device of the second aspect of the invention and a power emitting coil as described in relation to the first aspect of the invention. The re-positioning arrangement may e.g. be arranged and configured to, in response to the control unit determining that the efficiency of the electromagnetic radiation reception does not fulfil the pre-set criteria, at least vertically reposition the power emitting coil.

According to at least one example embodiment, the power emitting coil is arranged on a movable arm which can be moved up or down in order to reposition the power emitting coil.

Further advantages and features of the present disclosure are disclosed and discussed in the following description and the accompanying drawings.

### BRIEF DESCRIPTION OF THE DRAWINGS

With reference to the appended drawings, below follows a more detailed description of embodiments of the invention cited as examples.

In the drawings:
Fig. 1 is a side schematic view of a vehicle and a wireless charging system in accordance with an example embodiment of the invention;
Fig. 2 is a detailed view of wireless charging system and a wireless charging device, in which the vertical distance between a power emitting coil and a power receiving coil is varied in accordance with an example embodiment of the invention;
Fig. 3 is a detailed view of a wireless charging system and a wireless charging device, in which the vertical distance between a power emitting coil and a power receiving coil is varied in accordance with another example embodiment of the invention; and
Fig. 4 is a flowchart illustrating the steps of method in accordance with one example embodiment of the invention.

### DETAILED DESCRIPTION OF EXAMPLE EMBODIMENTS OF THE INVENTION

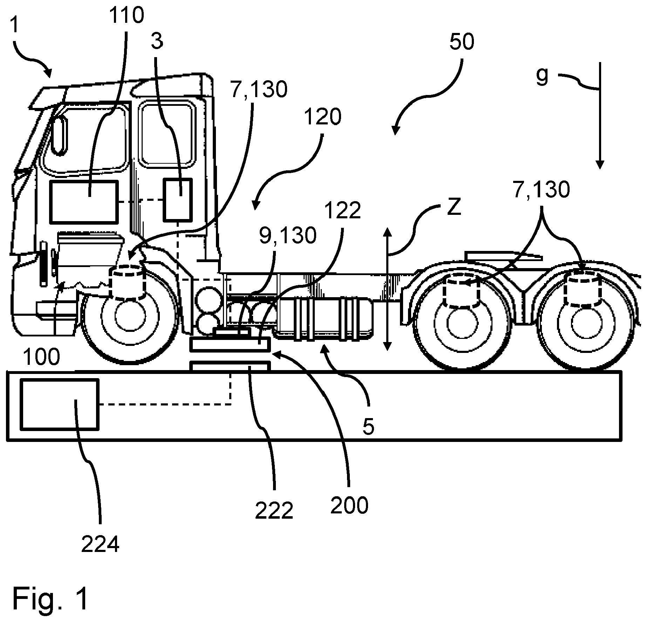

With reference to Fig. 1 a vehicle 1, here embodied as a heavy duty truck 1, is disclosed for which a wireless charging system 200 and a wireless charging device 120 of a kind disclosed in the present disclosure is advantageous. However, wireless charging system 200 and a wireless charging device 120 may as well be implemented in other types of vehicles, such as in busses, light-weight trucks, passenger cars, marine applications etc. The vehicle 1 may be an electric vehicle, such as a full electric vehicle or a hybrid, comprising a battery 110 and a motor or engine 100, wherein the engine 100 is at least partly powered by the battery 110. The wireless charging system 200 and a wireless charging device 120 are configured to charge the battery 110. The vehicle in Fig. 1 further comprises an undercarriage 5 comprising the underside of the vehicle 1, and a suspension arrangement 7, or suspension 7, arranged to configured to allow relative motion between the vehicle 1 (and undercarriage 5) and the tires or wheels of the vehicle 1.

In Fig. 1, the wireless charging system 200 comprises a wireless charging device 120 including a power receiving coil 122, and a power emitting coil 222. The power emitting coil 222 is configured to emit electromagnetic radiation, and the power receiving coil 122 is configured to receive electromagnetic radiation emitted from the power emitting coil 222. The electromagnetic radiation may typically refer to the electromagnetic field induced by the power emitting coil 222, which electromagnetic field the power receiving coil can utilize for power/current generation. Typically, for such power transmission to occur, the power receiving coil 122 must be within an electromagnetic radiation reception distance from the power emitting coil 222. As seen in Fig. 1, the power emitting coil 222 is powered by a power source 224, e.g. the electrical grid or a battery. The wireless charging system 200 may be referred to as an inductive charging system.

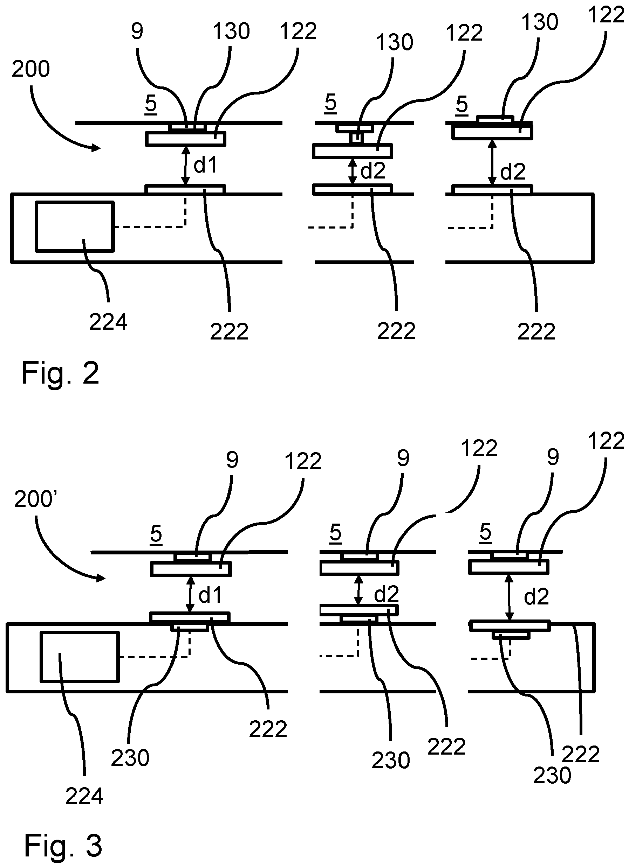

In Fig. 1, the power receiving coil 122 is attached to the undercarriage 5 of the vehicle 1 by means of an attaching device 9. Moreover, the wireless charging device 120 comprises a re-positioning arrangement 130 configured to, at least vertically reposition the power receiving coil 122 relative the power emitting coil 222. The movement in the vertical direction Z is in Fig. 1 parallel to the gravitational direction g. In the embodiment of Fig. 1, two alternatives of how the re-positioning arrangement 130 is integrated into the vehicle is shown. In a first example embodiment, the re-positioning arrangement 130 comprises, or is integrated into, the attaching device 9, and is thus attached to the undercarriage 5 of the vehicle 1. In this embodiment, the re-positioning arrangement 130 is arranged to move the power receiving coil 122 relative the undercarriage 5 in order to vary the distance between the power receiving coil 122 and the power emitting coil 222 (which is further described with reference to Fig. 2). In a second example embodiment, the re-positioning arrangement 130 comprises, or is integrated into, the suspension 7 of the vehicle 1. In this embodiment, the attaching device 9 is typically providing a firm, non-flexible, attachment between the power receiving coil 122 and the undercarriage 5 of the vehicle 1 (for example, the attaching device 9 may form a part or portion of the undercarriage 5).

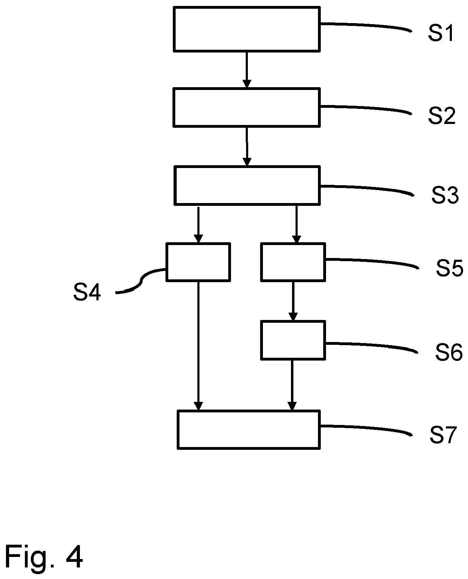

The wireless charging system 200, possibly via the wireless charging device 120, further comprises a control unit 3 (which may be an electrical control unit, ECU, of the vehicle 1) connected to the power receiving coil 122. The control unit is configured to determine whether or not the efficiency of electromagnetic radiation reception of the power receiving coil 122 achieves a pre-set criteria (which is further explained with reference to Fig. 4). The control unit 3 is typically configured to, in response to determining that the efficiency of the electromagnetic radiation reception does not fulfil or meet the pre-set criteria, instruct the re-positioning arrangement 130 to at least vertically reposition the power receiving coil 122 relative the power emitting coil 222. Moreover, the control unit 3 may be configured to determine whether or not the power receiving coil 122 is within an electromagnetic radiation reception distance from the power emitting coil 222. For example, if the vehicle 1 is positioned at a charging location 50, but in which the control unit 3 does not receive any indication or signal related to a received electromagnetic radiation by the power receiving coil 122, the control unit 3 may instruct the vehicle 1 to move, e.g. forwards or backwards until the control unit 3 receives such signal, or is otherwise stopped (e.g. due to safety concerns). As an alternative, the control unit 3 may instruct the re-positioning arrangement 130 to at least vertically reposition the power receiving coil 122 relative the power emitting coil 222, until the control unit 3 receives such signal, or is otherwise stopped (e.g. due to physical constraints of the re-positioning arrangement 130 and/or coil design).

It should be noted that the control unit 3 may instead of being on-vehicle based, be arranged off-board, e.g. on the same side as the power emitting coil 222. However, such configuration would typically include wireless communication with another control unit arranged on-board the vehicle 1.

Turning to the flowchart of Fig. 4, schematically illustrating steps of a method for repositioning a power receiving coil of a vehicle, such as the power receiving coil 122 of vehicle 1 in Fig. 1, relative a power emitting coil or a wireless charging system, such as the power emitting coil 222 or wireless charging system 200 of Fig. 1.

In a first step S1, a positioning of the vehicle at a charging location in which the power receiving coil detects reception of electromagnetic radiation emitted from the power emitting coil is detected.

At, or during, the first step S1, the power receiving coil is distanced from the power emitting coil by at least a first vertical distance d1, which e.g. is shown in Fig. 2.

In a second step S2, whether or not the efficiency of the electromagnetic radiation reception of the power receiving coil achieves a pre-set criteria is determined.

The second step S2 may e.g. be carried out by receiving data information related to the pre-set criteria (e.g. by a previous determination of the efficiency of the electromagnetic radiation reception, or by a predicted or expected efficiency of the electromagnetic radiation reception based on e.g. known characteristic of the emitted electromagnetic radiation), by measuring received electromagnetic radiation by the power receiving coil, calculating the efficiency of the electromagnetic radiation reception by utilizing the measured received electromagnetic radiation and known characteristic of the emitted electromagnetic radiation, and comparing calculated efficiency with the pre-set criteria, e.g. the predicted or expected efficiency.

In a third step S3, in response to determining that the efficiency of the electromagnetic radiation reception does not fulfil the pre-set criteria, the power receiving coil is repositioned relative the power emitting coil in at least the vertical direction.

The third step S3 results in that the power receiving coil is distanced from the power emitting coil by at least a second vertical distance d2. The second vertical distance d2 is either smaller than the first vertical distance d1, or larger than the first vertical distance d1, which e.g. is shown in Fig. 2.

The movement in the at least vertical direction may e.g. be a movement parallel to the gravitational direction, i.e. either in the gravitational direction or opposite the gravitational direction. As stated previously, the movement may be carried out by the power receiving coil and/or the power emitting coil.

According to at least one example embodiment, the third step S3 includes vertically moving the undercarriage of the vehicle to which the power receiving coil is attached to. Thus, the undercarriage is moved in at least the vertical direction in order to reposition the power receiving coil relative the power emitting coil. The power receiving coil is in this embodiment typically attached, such as e.g. firmly attached or rigidly attached, to the undercarriage of the vehicle, such that the power receiving coil and the undercarriage move in unison. The vertical movement of the undercarriage of the vehicle may e.g. be carried out by adjusting the suspension 7, or suspension arrangement 7, of the vehicle. Such suspension is typically arranged and configured to allow for a relative movement between the undercarriage and the wheels or tires of the vehicle.

According to at least one alternative example embodiment, the power receiving coil is movably attached to the undercarriage of the vehicle, and the third step S3 includes vertically moving the power receiving coil relative the undercarriage of the vehicle. This may e.g. be carried out by the re-positioning arrangement 130 described with reference to Fig. 1 and Fig. 2. Thus, in such embodiments, the power receiving coil is arranged and configured to allow for a relative movement between the undercarriage of the vehicle and the power receiving coil.

According to at least yet one alternative example embodiment, the third step S3 includes vertically moving the power emitting coil.

In such embodiments, at least the power emitting coil is arranged and configured to be moved at least in the vertical direction.

In a fourth step S4, the second step S2, and the third step S3, are repeated until the efficiency of the electromagnetic radiation reception of the power receiving coil fulfils the pre-set criteria. In case the pre-set criteria is a predetermined threshold, the repetition occurs until the efficiency is equal or above the predetermined threshold.

As previously mentioned, the vehicle 1 and the wireless charging system 200 can be described in relation to a geometric system with a horizontal plane through which the vertical direction perpendicularly runs. In other words, the vertical direction is a normal to the horizontal plane. For example, the vehicle may be described as extending in a longitudinal direction, from the back of the vehicle to the front of the vehicle, wherein such longitudinal direction extends in the horizontal plane.

In a fifth step S5, which may be carried out subsequent, or prior, to e.g. the third step S3, the power receiving coil is repositioned relative the power emitting coil in the horizontal plane in response to determining that the efficiency of the electromagnetic radiation reception of the power receiving coil does not fulfil the pre-set criteria. The part of determining that the efficiency of the electromagnetic radiation reception of the power receiving coil does not fulfil the pre-set criteria may e.g. be carried out during the second step S2, or an additional step corresponding to the second step S2 but carried out just prior to the fifth step S5. According to at least one example embodiment, the second step S2 is repeated just prior to performing the fifth step S5.

As stated previously for the third step S3 and the vertical movement, the movement in the horizontal plane may be carried out by the power receiving coil and/or the power emitting coil.

In a sixth step S6, the fifth step S5 and the second step S2 (or said step corresponding to the second step S2 carried out just prior to the fifth step S5) are repeated until the efficiency of the electromagnetic radiation reception of the power receiving coil fulfils the pre-set criteria. The sixth step S6 may also include the third step S3 in the repetition. Thus, in such embodiments, the second step S2, the third step S3 and the fifth step S5 are carried out and repeated until the efficiency of the electromagnetic radiation reception of the power receiving coil fulfils the pre-set criteria.

In a seventh step S7, the power receiving coil is fixed in its position relative the power emitting coil in response to determining that the efficiency of the electromagnetic radiation reception fulfils the pre-set criteria.

It should be noted that the naming of the steps not necessarily, but migth according to at least one example embodiment, relate to the order in which the steps are carried out. Thus, the order of the steps may be different than that explained here, and e.g. the third step S3 and the fifth step S6 may swop places, as well as the fourth step S4 and the sixth step S6. Moreover, the control unit 3 of Fig. 1 may be configured to carry out one or several of the steps S1-S7.

Fig. 2 and Fig. 3 illustrate schematic views of the wireless charging system 200, 200'. In Fig. 2, the first example embodiment of the re-positioning arrangement 130 of Fig. 1 is shown. That is, in which the re-positioning arrangement 130 comprises, or is integrated into, the attaching device 9, and thus is attached to the undercarriage 5 of the vehicle 1. The far left of Fig. 2 illustrates a position in which the power receiving coil 122 is distanced from the power emitting coil 222 by a first vertical distance d1. This may e.g. be the case during step S1 mentioned with reference to Fig. 4, or as a result of a subsequent step of positioning the vehicle 1 at the charging spot 50, or during a step of determining whether or not the power receiving coil 122 is within an electromagnetic radiation reception distance from the power emitting coil 222. In the middle of Fig. 2, a position in which the power receiving coil 122 is distanced from the power emitting coil 122 by a second vertical distance d2 is shown. Here, the second vertical distance d2 is smaller than the first vertical distance d1, as the re-positioning arrangement 130 has vertically moved the power receiving coil 122 towards the power emitting coil 222, and away from the undercarriage 5 of the vehicle 1 (e.g. by being instructed to do so by the control unit 3). Such smaller distance d2 may e.g. provide a more beneficial vertical distance between the power receiving coil 122 and the power emitting coil 222 with regards to efficiency of the electromagnetic radiation reception of the power receiving coil 122. In the far right of Fig. 2, a position in which the power receiving coil 122 is distanced from the power emitting coil 122 by a second vertical distance d2 being larger than the first vertical distance d1, is shown. Here, the re-positioning arrangement 130 has vertically moved the power receiving coil 122 away from the power emitting coil 222, and towards, and possibly into, the undercarriage 5 of the vehicle 1. Such larger distance d2 may alternatively provide a more beneficial vertical distance between the power receiving coil 122 and the power emitting coil 222 with regards to efficiency of the electromagnetic radiation reception of the power receiving coil 122. The re-positioning arrangement 130 may e.g. comprise an adjustable spring or otherwise extendable/contractible arrangement configured to move the power receiving coil 122 relative the undercarriage 5 of the vehicle 1.

In Fig, 3, an alternative embodiment of the wireless charging system 200' is shown. Here, the re-positioning arrangement 230 is arranged on the power emitting coil-side, and is arranged and configured to at least vertically move the power emitting coil 222. In more detail, in middle of Fig. 3, a position in which the power receiving coil 122 is distanced from the power emitting coil 222 by a first vertical distance d1 is shown. Correspondingly to Fig. 2, this may e.g. be the case during step S1 mentioned with reference to Fig. 4, or as a result of a subsequent step of positioning the vehicle 1 at the charging spot 50, or during a step of determining whether or not the power receiving coil 122 is within an electromagnetic radiation reception distance from the power emitting coil 222. In the middle of Fig. 2, a position in which the power receiving coil 122 is distanced from the power emitting coil 122 by a second vertical distance d2 is shown. Here, the second vertical distance d2 is smaller than the first vertical distance d1, as the re-positioning arrangement 230 has vertically moved the power emitting coil 222 towards the power receiving coil 122, and away from the ground/foundation in which the power emitting coil 222 is linked to. In the far right of Fig. 3, a position in which the power receiving coil 122 is distanced from the power emitting coil 122 by a second vertical distance d2 being larger than the first vertical distance d1, is shown. Here, the re-positioning arrangement 230 has vertically moved the power emitting coil 222 away from the power receiving coil 122, and towards, and possibly into, ground/foundation. Such smaller, or larger distance d2, may provide a more beneficial vertical distance between the power receiving coil 122 and the power emitting coil 222 with regards to efficiency of the electromagnetic radiation reception of the power receiving coil 122. The re-positioning arrangement 230 may e.g. comprise an adjustable spring or otherwise extendable/contractible arrangement configured to move the power emitting coil 222 relative the ground/foundation. For example, the power emitting coil 222 may be attached to an movable arm.

It should be noted that the re-positioning arrangement 130, 230 may furthermore be arranged and configured to move the power receiving coil 122 and/or the power emitting coil 222 in the horizontal plane as described with reference to Fig. 4.

The alternative embodiments which have been disclosed above may be combined in any way which is found advantageous, unless anything else is explicitly stated, as long as the features of the main claims are fulfilled. For example, the two re-positioning arrangements 130, 230 may be combined so as that both the power receiving coil 122 and the power emitting coil 222 can move independently of each other. Moreover, the charging system 200, 200' of Fig. 2 and Fig. 3, respectively, may be used together with the vehicle 1 of Fig. 1, and as already mentioned, the control unit 3 may be programmed to carry out the method, and the steps S1-S7, as described with reference to Fig. 4.

It is to be understood that the present invention is not limited to the embodiments described above and illustrated in the drawings; rather, the skilled person will recognize that many changes and modifications may be made within the scope of the appended claims.

Additionally, variations to the disclosed embodiments can be understood and effected by the skilled person in practicing the claimed inventive concept, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for repositioning a power receiving coil (122) of a vehicle (1) relative a power emitting coil (222) of a wireless charging system (200, 200'), the method comprising the steps of:
- detecting (S1) a positioning of the vehicle at a charging location (50) in which the power receiving coil detects reception of electromagnetic radiation emitted from the power emitting coil,
- determining (S2) whether or not the efficiency of the electromagnetic radiation reception of the power receiving coil achieves a pre-set criteria,
- repositioning (S3) the power receiving coil relative the power emitting coil in at least the vertical direction (z) in response to determining that the efficiency of the electromagnetic radiation reception does not fulfil the pre-set criteria.

2. The method according to claim 1, further comprising the step of repeating (S4) the step of determining (S2), and the step of repositioning (S3), until the efficiency of the electromagnetic radiation reception of the power receiving coil fulfils the pre-set criteria.

3. The method according to any one of the preceding claims, wherein in the step of detecting (S1), the power receiving coil is distanced from the power emitting coil by at least a first vertical distance (d1), and wherein the step of repositioning (S3) results in that the power receiving coil is distanced from the power emitting coil by at least a second vertical distance (d2), the second vertical distance being smaller or larger than said first vertical distance.

4. The method according to any one of the preceding claims, wherein the step of repositioning (S3) includes vertically moving the undercarriage (5) of the vehicle to which the power receiving coil is attached to.

5. The method according to claim 4, wherein the step of vertically moving the undercarriage of the vehicle is carried out by adjusting the suspension (7) of the vehicle.

6. The method according to any one of claims 1-3, wherein the power receiving coil is movably attached to the undercarriage of the vehicle, and the step of repositioning (S3) includes vertically moving the power receiving coil relative the undercarriage of the vehicle.

7. The method according to any one of the preceding claims, wherein the step of repositioning (S3) includes vertically moving the power emitting coil.

8. The method according to any one of the preceding claims, further comprising the step of holding (S7) the power receiving coil in a fixed position relative the power emitting coil in response to determining that the efficiency of the electromagnetic radiation reception fulfils the pre-set criteria.

9. A wireless power supply device (120) for a vehicle, the wireless power supply device comprising:
- a power receiving coil (122) configured to receive electromagnetic radiation emitted from a power emitting coil (222),
- a control unit (3) connected to the power receiving coil, the control unit being configured to determine whether or not the efficiency of electromagnetic radiation reception of the power receiving coil achieves a pre-set criteria,
- a re-positioning arrangement (130, 230) configured to, in response to the control unit determining that the efficiency of the electromagnetic radiation reception does not fulfil the pre-set criteria, at least vertically reposition the power receiving coil relative the power emitting coil.

10. The wireless power supply device according to claim 9, wherein the control unit is configured to determine whether or not the power receiving coil is within an electromagnetic radiation reception distance from the power emitting coil.

11. The wireless power supply device according to any one of claims 9-10, wherein the control unit is configured to repeat the step of determining whether or not the efficiency of the electromagnetic radiation reception of the power receiving coil achieves a pre-set criteria after each repositioning of the re-positioning arrangement, until the control unit determines that the efficiency of the electromagnetic radiation reception of the power receiving coil fulfils the pre-set criteria.

12. The wireless power supply device according to any one of claims 9-11, wherein the re-positioning arrangement is configured to, in response to the control unit determining that the efficiency of the electromagnetic radiation reception does not fulfil the pre-set criteria, move the power receiving coil vertically closer to, or further away from, the power emitting coil.

13. A vehicle (1) comprising a wireless power supply device according to any one of claims 9-12.

14. The vehicle according to claim 13, wherein the power receiving coil is attached to an undercarriage (5) of the vehicle, and the re-positioning arrangement is configured to vertically move the undercarriage of the vehicle in order to vertically move the power receiving coil.

15. The vehicle according to claim 13, wherein at least a part of the re-positioning arrangement is arranged in between the power receiving coil and the undercarriage of the vehicle such that the receiving coil is movably attached to the undercarriage of the vehicle, and wherein the re-positioning arrangement is configured to vertically move the power receiving coil relative the undercarriage of the vehicle.
